# EUROPEAN PATENT APPLICATION

(11) **EP 4 737 518 A1**
(43) Date of publication of application: **06.05.2026**
(21) Application number: 24869960.5
(22) Date of filing: 05.07.2024
(51) Int. Cl.: C08L 75/04, G06F 3/0354

(54) **COMPOSITE MATERIAL, STYLUS TIP, STYLUS TIP ASSEMBLY, STYLUS AND FORMING METHOD**

(30) Priority: 27.09.2023 CN 202311289201
(71) Applicant: Huawei Technologies Co., Ltd., Shenzhen, Guangdong 518129 (CN)
(72) Inventor: WU, Qiao, Shenzhen, Guangdong 518129 (CN); LI, Dongyang, Shenzhen, Guangdong 518129 (CN); GAO, Xinshang, Shenzhen, Guangdong 518129 (CN); BAI, Lei, Shenzhen, Guangdong 518129 (CN); YANG, Qingzhi, Shenzhen, Guangdong 518129 (CN); TU, Yiming, Shenzhen, Guangdong 518129 (CN)
(74) Representative: Pfenning, Meinig & Partner mbB
(86) International application number: PCT/CN2024/103962
(87) International publication number: WO 2025/066403

(57) **Abstract**

This application relates to the field of touch technologies, and discloses a composite material, a stylus tip, a stylus tip assembly, a stylus, and a forming method. The composite material includes at least a mixture of fiber and thermoplastic resin, the fiber and the thermoplastic resin are bonded to each other to jointly form a first porous structure, a second porous structure is formed inside the fiber, and the first porous structure and the second porous structure have resilience. The composite material provided in this application can effectively increase a writing amplitude, so that a rustling sound and a gritty sensation are generated in a writing process, and a user can feel a realistic texture similar to that of writing on paper.

## Description

This application claims priority to Chinese Patent Application No. 202311289201.3, filed with the China National Intellectual Property Administration on September 27, 2023 and entitled "COMPOSITE MATERIAL, STYLUS TIP, STYLUS TIP ASSEMBLY, STYLUS, AND FORMING METHOD", which is incorporated herein by reference in its entirety.

### TECHNICAL FIELD

This application relates to the field of touch technologies, and in particular, to a composite material, a stylus tip, a stylus tip assembly, a stylus, and a forming method.

### BACKGROUND

With the popularization of electronic devices with a touch function, such as a mobile phone, a computer, and a graphics tablet, in people's life and work, a stylus has gradually become one of mainstream human-computer interaction manners. A user can implement a touch operation on a touch device through tapping or sliding on a touchscreen of the touch device by using a stylus tip of a stylus.

Currently, styluses on the market are mainly classified into electromagnetic styluses and capacitive styluses. For a capacitive stylus, a stylus tip of the stylus transmits an electrical signal. When the capacitive stylus approaches a touchscreen, an electric field on the touchscreen is interfered with, and capacitance inside the touchscreen also changes. By measuring this capacitance change, the system may determine a position of the capacitive stylus on the touchscreen, to implement a touch operation.

The capacitive stylus is favored because of low costs and good compatibility. However, due to a limitation of a material of a stylus tip currently, when a user uses a capacitive stylus to perform an operation such as writing, it is difficult for the user to feel a realistic texture similar to that of writing on paper, and writing experience needs to be improved.

### SUMMARY

To resolve the foregoing technical problem, this application provides a composite material, a stylus tip, a stylus tip assembly, a stylus, and a forming method. The following describes this application from a plurality of aspects, and mutual reference may be made to implementations and beneficial effects of the following plurality of aspects.

A first aspect of this application provides a composite material, where the composite material includes at least a mixture of fiber and thermoplastic resin, the fiber and the thermoplastic resin are bonded to each other to jointly form a first porous structure, a second porous structure is formed inside the fiber, and the first porous structure and the second porous structure have resilience.

Based on this implementation of this application, when the composite material is in contact with and slides relative to another object (for example, a touchscreen described in the following embodiment), the first porous structure and the second porous structure are subject to stress. With a change of a magnitude of the stress, the first porous structure and the second porous structure compress and rebound, and air in the first porous structure and the second porous structure is accordingly compressed and released, causing large vibration, so that particles inside the first porous structure and the second porous structure collide and move against each other, and a distinct rustling sound and a distinct gritty sensation are generated, thereby effectively improving writing experience.

In a possible implementation of the first aspect, the fiber is conductive fiber obtained through conductive processing, and/or the thermoplastic resin is conductive thermoplastic resin obtained through conductive processing. In this way, the composite material can be conductive.

In a possible implementation of the first aspect, the composite material further includes a mixture of a conductive filler, fiber, and thermoplastic resin. In this way, conductivity of the composite material is further improved.

In a possible implementation of the first aspect, the conductive filler includes carbon, metal powder, or metal fiber.

In a possible implementation of the first aspect, conductivity of the composite material ranges from 0.001 S/m to 1 S/m.

In a possible implementation of the first aspect, the fiber includes polyester fiber, polyester fiber, acrylic fiber, nylon fiber, carbon fiber, aramid fiber, or glass fiber.

In a possible implementation of the first aspect, the thermoplastic resin includes polyurethane resin, polycarbonate resin, polyoxymethylene resin, or thermoplastic polyamide elastomer resin.

In a possible implementation of the first aspect, a weight of the fiber accounts for 40% to 70% of a total weight of the composite material, and a weight of the thermoplastic resin accounts for 20% to 50% of the total weight of the composite material.

In a possible implementation of the first aspect, a weight of the fiber accounts for 10% to 30% of a total weight of the composite material, a weight of the thermoplastic resin accounts for 60% to 90% of the total weight of the composite material, and a weight of the conductive filler accounts for 2% to 10% of the total weight of the composite material.

A second aspect of this application provides a stylus tip, where a material of a writing end of the stylus tip is any composite material in the first aspect and the possible implementations of the first aspect.

It should be understood that, for beneficial effects of the second aspect, refer to the descriptions of the first aspect. Details are not described herein again.

In a possible implementation of the second aspect, a material of the stylus tip is the composite material, and the composite material is conductive. In this way, signal strength and stability of the stylus tip can be further improved, thereby improving writing linearity of the stylus tip.

A third aspect of this application provides a stylus tip assembly, where the stylus tip assembly includes a housing and any stylus tip in the second aspect and the possible implementations of the second aspect, where the stylus tip includes a head portion and a shank portion that are connected in a first direction, the writing end is disposed on the head portion, and the shank portion is inserted into the housing. The shank portion includes a first shank segment, the first shank segment is attached to an inner wall of the housing, an outer diameter of the first shank segment gradually increases from a first end to a second end of the first shank segment, and the first end is closer to the head portion than the second end.

Based on this implementation of this application, because the foregoing composite material is used as a material of the writing end of the stylus tip, in a process in which a user uses the stylus tip assembly to write, the first porous structure and the second porous structure in the composite material repeatedly compress and rebound. Therefore, a writing amplitude can be effectively increased, and a distinct rustling sound and a distinct gritty sensation are further generated. In addition, the inner wall of the housing is attached to the first shank segment, so that strength of connection between the stylus tip and the housing can be effectively enhanced, to prevent the stylus tip from being detached from the housing and being damaged during falling, thereby improving drop-resistant reliability.

In a possible implementation of the third aspect, the stylus tip is mushroom-shaped, the head portion forms a mushroom head, and the shank portion forms a mushroom stem.

Based on this implementation of this application, because the head portion in the shape of the mushroom head has a thick wall, better wear resistance can be achieved, thereby prolonging a service life of the stylus tip. In addition, the head portion in the shape of the mushroom head is not easily deformed during falling, so that drop-resistant reliability of the stylus tip is further improved.

In a possible implementation of the third aspect, a material of the housing is an injection molding material.

In a possible implementation of the third aspect, a material of the housing includes polycarbonate or an acrylonitrile-butadiene-styrene copolymer.

A fourth aspect of this application provides a stylus, where the stylus includes a stylus barrel and any stylus tip assembly in the third aspect and the possible implementations of the third aspect, where the stylus tip assembly is connected to the stylus barrel through the housing.

It should be understood that, for beneficial effects of the fourth aspect, refer to the descriptions of the first aspect. Details are not described herein again.

A fifth aspect of this application provides a method for forming a composite material, where the method includes:
obtaining a fiber tow;
performing impregnation processing on the fiber tow, to obtain a fiber tow coated with thermoplastic resin on a surface; and
curing the thermoplastic resin coated on the surface of the fiber tow, to obtain the composite material.

Based on the foregoing method for forming a composite material, a mixture of fiber and the thermoplastic resin may be obtained through processing such as impregnation and curing, to obtain the composite material. The fiber and the thermoplastic resin that are bonded to each other can jointly form a first porous structure with resilience, and a second porous structure with resilience can be formed inside the fiber, so that when the composite material rubs against another object (for example, the touchscreen described in the following embodiment), a distinct rustling sound and a distinct gritty sensation can be generated. This method has simple steps and low forming difficulty.

In a possible implementation of the fifth aspect, the fiber tow is a conductive fiber tow obtained through conductive processing. In this way, the prepared composite material can be conductive.

In a possible implementation of the fifth aspect, the conductive processing includes:
cleaning the fiber tow by using an alkaline solution;
soaking a cleaned fiber tow in a metal salt solution, to attach metal ions to the surface of the fiber tow; and
reducing the metal ions attached to the surface of the fiber tow, so that the fiber tow is conductive.

In a possible implementation of the fifth aspect, the fiber tow is a fiber tow obtained after grinding processing.

Based on this implementation of this application, the fiber tow is pre-formed by using a grinding tool, so that uniformity, surface quality, and processability of the conductive fiber tow can be further improved.

In a possible implementation of the fifth aspect, performing the impregnation processing on the fiber tow includes:
mixing the thermoplastic resin and an ester-based mixed solvent, to obtain a mixture; and
impregnating the fiber tow by using the mixture.

Based on this implementation of this application, the ester-based solvent may further improve fluidity of the thermoplastic resin, to reduce difficulty in impregnation processing, thereby improving a yield rate of the composite material.

A sixth aspect of this application provides a method for forming a stylus tip assembly, used to form any stylus tip assembly in the third aspect and the possible implementations of the third aspect. The method includes:
obtaining the stylus tip; and
placing the stylus tip into an injection molding mold, and forming the housing in an in-mold injection molding manner, to obtain the stylus tip assembly.

Based on the method for forming a stylus tip assembly, the stylus tip is first prepared by using a composite material, and then the housing and the stylus tip are integrally formed through injection molding in the in-mold injection molding manner, so that a shape of the housing can better adapt to an appearance of the stylus tip, and a fit gap between the housing and the stylus tip can be effectively reduced, thereby improving precision of the stylus tip assembly, further improving accuracy of transmitting writing force and pressure sensitivity, and reducing a sense of shaking of the stylus tip assembly during writing. In addition, this forming manner is simple, a yield rate of the stylus tip assembly is low, and the stylus tip assembly is aesthetically pleasing.

In a possible implementation of the sixth aspect, the injection molding mold includes a front mold, a rear mold, a first insert, and a second insert. The first insert is disposed in the front mold, the first insert is sleeved outside the head portion of the stylus tip, and the second insert extends through the front mold and the rear mold, and is clamped on the shank portion of the stylus tip. A cavity of the front mold fits with a cavity of the rear mold to correspondingly form an external structure of the housing of the stylus tip, and the second insert fits with the stylus tip to correspondingly form an internal structure of the housing of the stylus tip.

In a possible implementation of the sixth aspect, the head portion of the stylus tip is in interference fit with an inner wall of the first insert, and an end surface of the stylus tip is attached to an end surface of the housing in the first direction, where a difference between a diameter of the end surface of the stylus tip and a diameter of the end surface of the housing ranges from 0.1 mm to 0.3 mm, the diameter of the end surface of the stylus tip is greater than the diameter of the end surface of the housing, and the first direction is an extension direction of the stylus tip.

Based on this, a radial tolerance of the stylus tip can be effectively reduced, and it is ensured that the stylus tip can be closely attached to the first insert, to implement injection molding and sealing, and an injection molding material does not overflow from a fit gap between the stylus tip and the first insert, so that flash is not generated, thereby further improving aesthetics of the stylus tip assembly and preventing scratching a hand.

In a possible implementation of the sixth aspect, an elastic pad is disposed between the shank portion of the stylus tip and the second insert in the first direction, and the first direction is an extension direction of the stylus tip. In this way, an axial tolerance of the stylus tip can be effectively reduced.

In a possible implementation of the sixth aspect, the housing includes a first connection portion and a second connection portion that are connected in the first direction, the first direction is an extension direction of the stylus tip, the first connection portion is configured to connect to the shank portion of the stylus tip, an outer diameter of the first connection portion of the housing gradually increases from a first end of the first connection portion to a second end of the first connection portion, and the first end of the first connection portion is farther away from the second connection portion than the second end. An end surface of the second end is provided with an annular rib groove.

Based on this implementation of this application, the outer diameter of the first connection portion of the housing gradually increases from the first end to the second end, so that the stylus tip has smoother appearance and better aesthetics and refinement. In addition, the annular rib groove can effectively reduce thickness of the second end, to avoid shrinkage phenomena such as local depressions and voids at the second end during injection molding, thereby further improving a yield rate of the housing.

In a possible implementation of the sixth aspect, a resin inlet of the injection molding mold is provided in the annular rib groove. In this way, injection molding marks (for example, jetting marks and flow marks caused by jetting) are avoided on a surface of the stylus tip assembly, and aesthetics and refinement of the appearance of the stylus tip assembly are effectively improved.

In a possible implementation of the sixth aspect, the housing includes a first connection portion and a second connection portion that are connected in the first direction, the second connection portion of the housing is provided with an inner thread used for threaded engagement with a stylus barrel, and a peripheral surface of the second connection portion of the housing is provided with an anti-rotation groove.

Based on this implementation of this application, the housing and the stylus barrel are detachably connected through a threaded connection, so that the stylus tip assembly is replaced at any time based on an actual requirement. In addition, the threaded connection can effectively enhance strength of connection between the housing and the stylus barrel, and further improve drop reliability. In addition, the anti-rotation groove can prevent the housing from rotating with the second insert. In this way, after the inner thread of the housing is formed, the second insert can be smoothly withdrawn through rotation, to avoid damage to the housing in a demolding process, thereby effectively improving the yield rate of the housing.

In a possible implementation of the sixth aspect, a gap between the first insert and the front mold is used for exhausting air.

Based on this, there is no need to additionally provide another vent on the front mold, so that an appearance surface of the formed stylus tip assembly is smooth and flawless, thereby further improving aesthetics of the stylus tip assembly. In addition, the gap between the first insert and the front mold can ensure smooth resin flow after injection, and avoids phenomena such as air traps and short shots in complex structures or dead corners.

A seventh aspect of this application provides a method for forming a stylus tip assembly, used to form any stylus tip assembly in the third aspect and the possible implementations of the third aspect. The method includes: forming the stylus tip and the housing of the stylus tip by using a two-shot injection molding process in an injection molding mold, to obtain the stylus tip assembly.

Based on the method for forming a stylus tip assembly, the stylus tip assembly can be formed through a single operation, to effectively reduce a fit gap between the stylus tip and the housing, and avoid a mounting deviation caused by a plurality of times of injection molding assembly, thereby improving forming precision.

### BRIEF DESCRIPTION OF DRAWINGS

FIG. 1 is a diagram of an example scenario of interaction between a stylus and an electronic device according to an embodiment of this application;
FIG. 2 is a diagram of a structure of a stylus in some technical solutions;
FIG. 3 is a diagram of a structure of a stylus in some other technical solutions;
FIG. 4A is a micrograph of a composite material according to an embodiment of this application;
FIG. 4B is a partial enlarged view of a composite material in an S1 region in FIG. 4A according to an embodiment of this application;
FIG. 5A is a diagram of a structure of a stylus according to an embodiment of this application;
FIG. 5B is a partial enlarged view of a stylus in an S2 region in FIG. 5A according to an embodiment of this application;
FIG. 5C is a cross-sectional view along A-A of a stylus in an S2 region in FIG. 5A according to an embodiment of this application;
FIG. 6A is a side view of a stylus tip assembly according to an embodiment of this application;
FIG. 6B is a cross-sectional view along A-A of a stylus tip assembly in FIG. 6A according to an embodiment of this application;
FIG. 7 is a diagram of a structure of a stylus tip according to an embodiment of this application;
FIG. 8 is a flowchart of a method for forming a composite material according to an embodiment of this application;
FIG. 9 is a flowchart of a method for forming a stylus tip according to an embodiment of this application;
FIG. 10 is a flowchart of a method for forming a stylus tip assembly according to an embodiment of this application; and
FIG. 11 is a diagram of forming a stylus tip assembly through in-mold injection molding in an injection molding mold according to an embodiment of this application.

### DESCRIPTION OF EMBODIMENTS

To make the objectives, technical solutions, and advantages of this application clearer, the following further describes the implementations of this application in detail with reference to the accompanying drawings.

An implementation of this application is used to provide a composite material. The composite material may be used in a stylus tip of a stylus, and can effectively improve writing experience. Before the technical solutions of this application are described, an example application scenario of this application is first described with reference to the accompanying drawings.

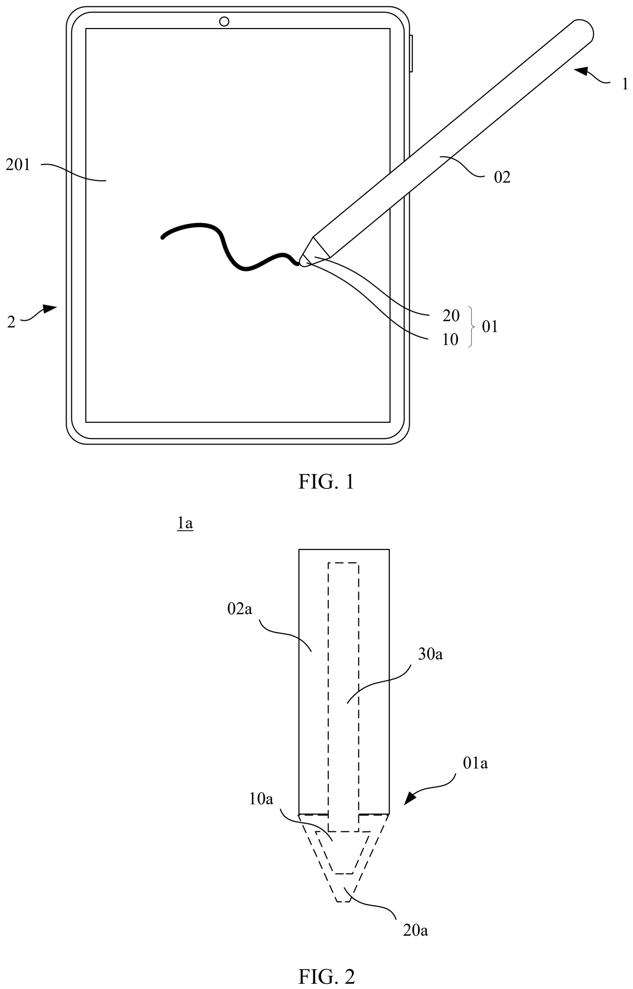

FIG. 1 is a diagram of an example scenario of interaction between a stylus 1 and an electronic device 2 according to an embodiment of this application. As shown in FIG. 1, the electronic device 2 may be any electronic device that can interact with the stylus 1. For example, the electronic device 2 may be any electronic device having a touch function, such as a mobile phone, a tablet computer, a notebook computer, a graphics tablet, a media player, a wearable device, an e-reader, or a touch television. This is not limited in this application. The following is described by using an example in which the electronic device 2 is a tablet computer.

As shown in FIG. 1, the stylus 1 may include a stylus tip assembly 01 and a stylus barrel 02. The stylus tip assembly 01 includes a stylus tip 10 and a housing 20 that are connected. The housing 20 is connected to one end of the stylus barrel 02, to mount the stylus tip assembly 01 on the stylus barrel 02. The electronic device 2 includes a touchable display 201. A user may hold the stylus barrel 02 of the stylus 1 with a hand, and contact the stylus tip 10 of the stylus 1 with the display 201, to interact with the display 201. For example, the user may slide the stylus 1 on the display 201, to implement operations such as writing and drawing. For another example, the user may further tap an application icon (not shown) on the display 201 by using the stylus 1, to start a corresponding application.

The following describes example structures of the stylus with reference to the accompanying drawings.

FIG. 2 is a diagram of a structure of a stylus 1a in some technical solutions. With reference to FIG. 2, a stylus tip assembly 01a of the stylus 1a includes a stylus tip 10a, a housing 20a, and a conductive pin 30a. The stylus tip 10a is made of conductive plastic. A material of the housing 20a is insulating plastic. The stylus tip 10a is disposed inside the housing 20a, and is connected to one end of the conductive pin 30a. The other end of the conductive pin 30a is configured to connect to a radio frequency line (not shown) inside the stylus 1a. The stylus tip assembly 01a may further include an elastic stylus head (not shown). One end of the elastic stylus head is connected to the stylus tip 10a, and the other end is located outside the housing 20a.

In the stylus 1a, materials of the stylus tip 10a and the housing 20a of the stylus 1a are both plastic, and are smooth. An area of a surface in contact with a touchscreen is small. In a process of writing by using the stylus 1a, no distinct rustling sound and gritty sensation are generated, and it is difficult for a user to feel a realistic texture similar to that of writing on paper.

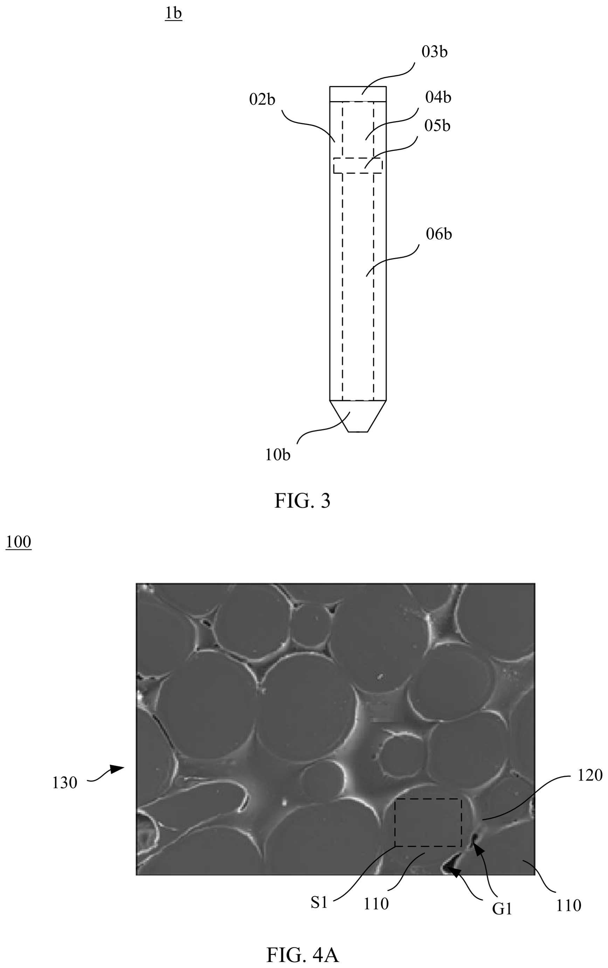

FIG. 3 is a diagram of a structure of a stylus 1b in some other technical solutions. With reference to FIG. 3, a material of a stylus tip 10b of the stylus 1b is insulating fiber. A top cover 03b is disposed on a top of a stylus barrel 02b. The top cover 03b seals the top of the stylus barrel 02b. An elastic component 04b, a pressure block 05b, and a cotton tube 06b are disposed inside the stylus barrel 02b. A top of the elastic component 04b is connected to the top cover 03b, and a bottom of the elastic component 04b is fastened to the pressure block 05b. A bottom of the pressure block 05b is movably connected to a top of the cotton tube 06b. A plastic film is disposed outside the cotton tube 06b, and cotton is filled inside the cotton tube 06b. The cotton may store conductive liquid. A bottom of the cotton tube 06b is connected to the stylus tip 10b. In a use process, a user needs to apply large pressure to the stylus 1b, so that the conductive liquid in the cotton tube 06b can fully soak the stylus tip 10b, thereby implementing a touch operation.

In the stylus 1b, a material of the stylus tip 10b of the stylus tip 1b is soft fiber. Therefore, when the stylus tip 10b is in contact with the touchscreen, it is also difficult to generate a distinct rustling sound and a distinct gritty sensation.

In conclusion, due to a limitation of the material of the stylus tip, when the user uses the stylus to perform an operation such as writing, a distinct rustling sound and a distinct gritty sensation cannot be generated. Therefore, it is difficult for the user to feel a realistic texture similar to that of paper, and writing accuracy and smoothness are poor.

The composite material provided in this embodiment of this application is used to resolve the foregoing problem. In this embodiment of this application, the composite material includes a porous structure (for example, a first porous structure 130 and a second porous structure 140 described below). When the composite material is used in the stylus tip 10 of the stylus 1, the porous structures of the composite material can effectively increase a writing amplitude of the stylus tip 10, so that a rustling sound and a gritty sensation are more distinct, and writing is more real and natural, thereby helping the user better master a writing speed and writing force, and improving writing accuracy and comfort.

The technical solutions of this application are described in detail below with reference to the accompanying drawings.

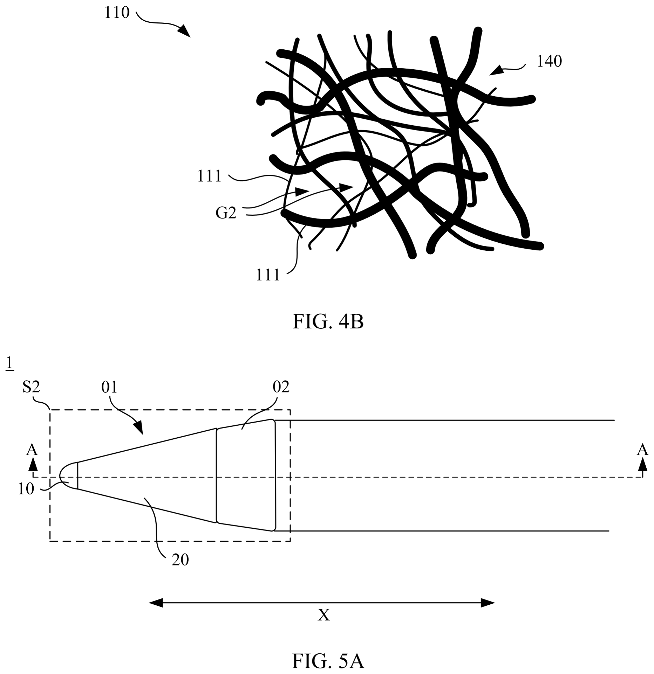

FIG. 4A is a micrograph of a composite material 100 according to an embodiment of this application. FIG. 4B is a partial enlarged view of the composite material 100 in an S1 region in FIG. 4A according to an embodiment of this application. With reference to FIG. 4A and FIG. 4B, the composite material 100 includes at least a mixture of fiber 110 and thermoplastic resin 120.

The fiber 110 and the thermoplastic resin 120 are bonded to each other. In other words, there is adhesive force between contact surfaces of the fiber 110 and the thermoplastic resin 120, so that the fiber 110 and the thermoplastic resin 120 are integrated into a single entity. The fiber 110 and the thermoplastic resin 120 that are bonded to each other can jointly form the first porous structure 130. The first porous structure 130 includes a plurality of pores G1 formed between the fiber 110 and the thermoplastic resin 120 that are adjacent to each other.

With reference to FIG. 4B, the fiber 110 includes a plurality of fine filaments 111. The compressible and resilient second porous structure 140 can be formed inside the fiber 110. The second porous structure 140 includes a plurality of pores G2 formed between adjacent filaments 111.

Both the first porous structure 130 and the second porous structure 140 have resilience. In other words, the first porous structure 130 and the second porous structure 140 are deformed under an action of external force. After the external force applied to the first porous structure 130 and the second porous structure 140 is removed, the first porous structure 130 and the second porous structure 140 can quickly recover to an original shape.

When the composite material 100 is in contact with and slides relative to a touchscreen (for example, the foregoing display 201), the first porous structure 130 and the second porous structure 140 are subject to stress. With a change of a magnitude of the stress, the pores G1 of the first porous structure 130 and the pores G2 of the second porous structure 140 compress and rebound, and air in the pores G1 and the pores G2 is accordingly compressed and released, causing large vibration, so that particles inside the first porous structure 130 and the second porous structure 140 collide and move against each other, and a distinct rustling sound and a distinct gritty sensation are generated, thereby effectively improving writing experience.

In some embodiments of this application, a weight of the fiber 110 may account for 40% to 70% of a total weight of the composite material 100, and a weight of the thermoplastic resin 120 may account for 20% to 50% of the total weight of the composite material 100.

In some embodiments of this application, porosity of the first porous structure 130 may range from 5% to 10%.

In some embodiments of this application, porosity of the second porous structure 140 may range from 5% to 30%.

In some embodiments of this application, the composite material 100 has conductivity, so that signal strength of the stylus tip 10 can be effectively enhanced, and writing linearity of the stylus tip 10 can be improved. For example, the fiber 110 of the composite material 100 may be conductive fiber obtained through conductive processing, so that the composite material 100 can be conductive. For another example, the thermoplastic resin 120 of the composite material 100 may be conductive thermoplastic resin obtained through conductive processing, so that the composite material 100 can be conductive.

Further, the composite material 100 may further include a mixture of a conductive filler (for example, carbon, metal powder, or metal fiber), the fiber 110, and the thermoplastic resin 120. The conductive filler can further enhance conductivity of the composite material 100, so that signal strength of the stylus tip 10 can be effectively enhanced, and writing linearity of the stylus tip 10 can be improved.

For example, a weight of the fiber 110 may account for 10% to 30% of a total weight of the composite material 100, a weight of the thermoplastic resin 120 may account for 60% to 90% of the total weight of the composite material 100, and a weight of the conductive filler may account for 2% to 10% of the total weight of the composite material 100.

In some embodiments of this application, conductivity of the composite material 100 ranges from 0.001 S/m to 1 S/m, for example, 0.001 S/m, 0.002 S/m, or 0.003 S/m, to ensure that writing requirements in various application scenarios can be met.

In some embodiments of this application, the fiber 110 includes polyester fiber, polyester fiber, acrylic fiber, nylon fiber, carbon fiber, aramid fiber, or glass fiber.

In some embodiments of this application, the thermoplastic resin 120 includes polyurethane resin (for example, thermoplastic polyurethane (thermoplastic polyurethane, TPU)), polycarbonate resin (for example, polycarbonate (polycarbonate, PC)), polyoxymethylene resin (for example, polyformaldehyde (polyformaldehyde, POM)), or thermoplastic polyamide elastomer resin (for example, thermoplastic polyamide elastomer (thermoplastic polyamide elastomer, TPAE)).

In some implementations, the thermoplastic resin 120 may be the polyurethane resin. The polyurethane resin includes soft segments (flexible long chains of oligomeric polyol) and hard segments (diisocyanate and a chain extender), which are alternately arranged, and hydrogen bonds in urethane linkage, and has strong intermolecular force. Therefore, the polyurethane resin has good wear resistance and toughness after being cured, so that durability of the composite material 100 can be further improved.

This application further provides a stylus tip, a stylus tip assembly including the stylus tip, and a stylus. A material of a writing end (that is, an end that is of the stylus tip and that is in contact with a touchscreen during writing) of the stylus tip provided in this application is the foregoing composite material 100, so that a writing amplitude can be effectively increased, thereby enhancing a rustling sound and a gritty sensation during writing, and improving user experience. The following is described in detail with reference to the accompanying drawings.

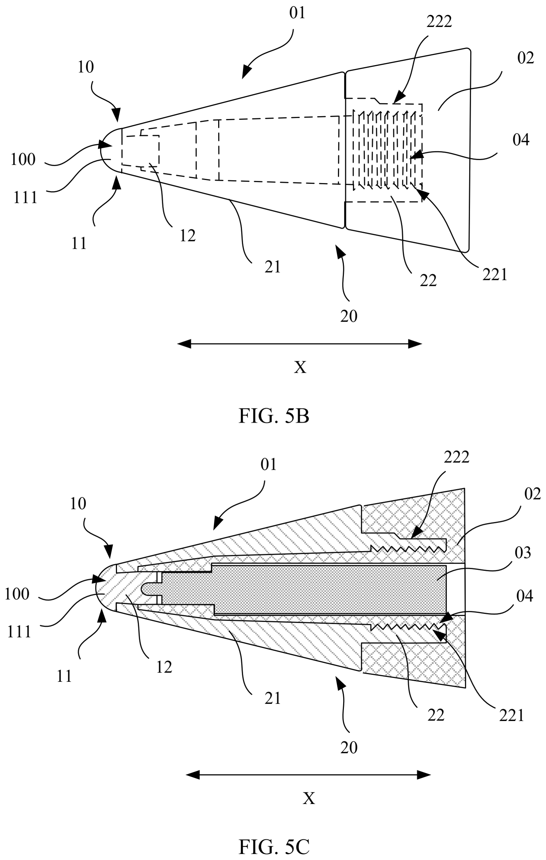

FIG. 5A to FIG. 5C are diagrams of a structure of a stylus 1 according to an embodiment of this application. FIG. 5B is a partial enlarged view of the stylus 1 in an S2 region in FIG. 5A, and shows a structure inside the stylus 1 by using a dashed line. FIG. 5C is a cross-sectional view along A-A of the stylus 1 in the S2 region in FIG. 5A. With reference to FIG. 5A to FIG. 5C, the stylus 1 includes a stylus tip assembly 01 and a stylus barrel 02.

The stylus tip assembly 01 includes a stylus tip 10 and a housing 20. The stylus tip 10 includes a head portion 11 and a shank portion 12. The head portion 11 and the shank portion 12 are connected in an X direction (used as a first direction). A writing end 111 is disposed on the head portion 11. A material of the writing end 111 is the composite material 100. The housing 20 includes a first connection portion 21 and a second connection portion 22 that are disposed opposite to each other in the X direction. The first connection portion 21 of the housing 20 is sleeved outside the shank portion 12 of the stylus tip 10. The second connection portion 22 of the housing 20 is connected to the stylus barrel 02.

The stylus barrel 02 extends in the X direction. The stylus barrel 02 may be a cylindrical structure, or may be a hollow tubular structure of any other shape. For example, a cross-section of the hollow tubular structure is a square, a hexagon, an octagon, or an irregular polygon. This is not limited in this application.

In some embodiments of this application, a pressure sensitivity module 03 may be disposed inside the stylus barrel 02. The pressure sensitivity module 03 is connected to the stylus tip 10, so that a magnitude of force applied by the user to press the stylus 1 can be accurately measured, thereby further improving writing precision. In some other embodiments, another component, for example, a button, an input/output component (USB interface), or a cap, may be further disposed on the stylus barrel 02. This is not limited in this application.

Because the foregoing composite material 100 is used as a material of the writing end 111 of the stylus tip 10, in a process in which a user uses the stylus 1 to write, the first porous structure 130 and the second porous structure 140 in the composite material 100 repeatedly compress and rebound. Therefore, a writing amplitude can be effectively increased, and a distinct rustling sound and a distinct gritty sensation are further generated. For a specific principle of generating the rustling sound and the gritty sensation by the composite material 100, refer to FIG. 4A and FIG. 4B and related descriptions thereof. Details are not described herein again. Second, the first porous structure 130 and the second porous structure 140 enable a surface of the composite material 100 to have an irregular concave and convex structure, so that an area of contact between the stylus tip 10 and the touchscreen can be effectively increased, to further increase friction between the porous mesh structure 130 and the touchscreen and increase a writing amplitude, thereby enhancing a gritty sensation and a rustling sound. The rustling sound and the gritty sensation can provide the user with writing experience closer to that of writing by using paper and a pen, making writing more real and natural. In addition, the sound and the touch feeling can also help the user better master a writing speed, writing force, a stroke change, and the like, to improve writing precision and smoothness.

In addition, the composite material 100 has specific flexibility. When the stylus 1 falls, the composite material 100 can deform to cushion impact, effectively absorb impact energy generated by the fall, and avoid damage to internal components (for example, the pressure sensitivity module 03) of the stylus 1, thereby effectively improving drop-resistant reliability of the stylus 1.

In some embodiments of this application, a material of each part of the stylus tip 10 may be the composite material 100. The composite material 100 has conductivity. In other words, the conductive stylus tip 10 may be prepared by using the conductive composite material 100. In this way, a conductive part of the stylus tip 10 can be in direct contact with the touchscreen (for example, the display 201), to further improve signal strength and stability of the stylus 1, thereby further improving writing linearity of the stylus 1.

For example, as shown in FIG. 2, because the insulating housing 20a and the insulating elastic stylus head are both wrapped outside the conductive stylus tip 10a, when the stylus 1a is used for writing, the stylus tip 10a is not in direct contact with the touchscreen. A particular signal loss is generated when the stylus tip 10a transmits a capacitive signal. For another example, as shown in FIG. 3, in a process in which a user holds the stylus 1b for writing, pressure applied to the stylus 1b changes. As a result, conductive liquid wets the stylus tip 10b to different degrees, causing a signal of the stylus 1b to fluctuate greatly. In this embodiment of this application, the material of the stylus tip 10 of the stylus 1 is the conductive composite material 100, the conductive part of the stylus tip 10 may be in direct contact with the touchscreen, and there is no insulation layer that hinders signal transmission. Therefore, compared with the stylus 1a shown in FIG. 2 and the stylus 1b shown in FIG. 3, the stylus 1 provided in this application has better signal strength and stability.

In addition, the stylus tip 1b shown in FIG. 3 needs to be provided with the elastic component 04b, the pressure block 05b, and the cotton tube 06b, to enable the stylus tip 10b to be conductive. The structure is complex, and assembly difficulty is increased. In this application, the stylus tip 10 may be prepared by using the conductive composite material 100, and may be conductive itself. Therefore, no other component needs to be additionally added inside the stylus 1 to assist the stylus tip 10 in implementing a conductive function. The structure of the stylus 1 is simpler, and assembly difficulty is lower.

The following further describes specific structures and connection manners of the components in the stylus 1 with reference to the accompanying drawings.

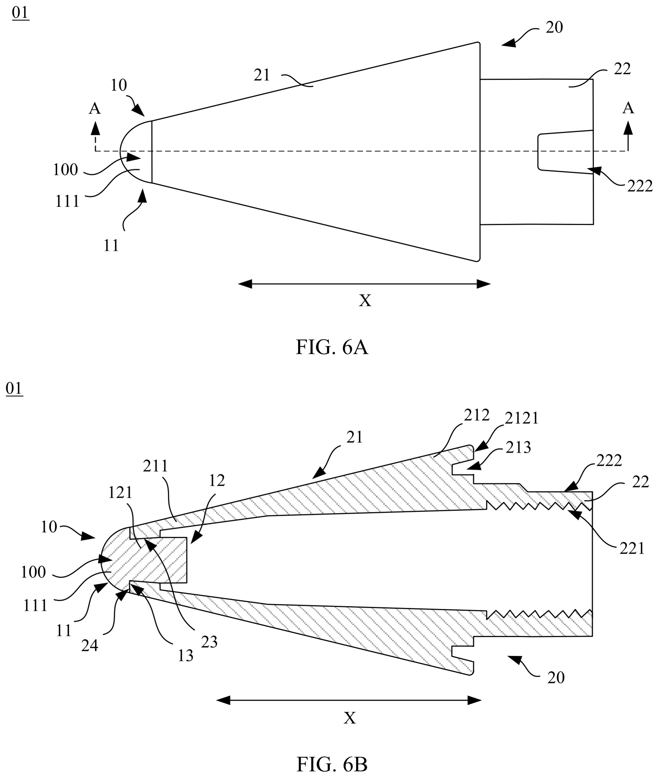

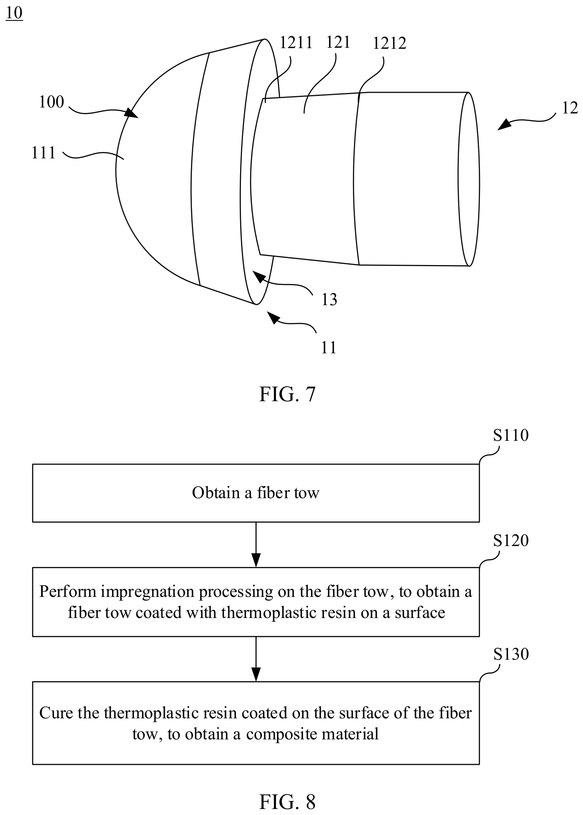

FIG. 6A and FIG. 6B are diagrams of a structure of a stylus tip assembly 01 according to an embodiment of this application. FIG. 6A is a side view of the stylus tip assembly 01, and FIG. 6B is a cross-sectional view along A-A of the stylus tip assembly 01 in FIG. 6A. FIG. 7 is a diagram of a structure of a stylus tip 10 according to an embodiment of this application.

With reference to FIG. 6A to FIG. 7, the shank portion 12 of the stylus tip 10 includes a first shank segment 121. An outer diameter of the first shank segment 121 gradually increases from a first end 1211 to a second end 1212. The first end 1211 of the first shank segment 121 is closer to the head portion 11 than the second end 1212 of the first shank segment 121. A shape of an inner wall 23 of the housing 20 adapts to a shape of the first shank segment 121, so that the first shank segment 121 is attached to the inner wall 23. In this way, strength of connection between the stylus tip 10 and the housing 20 can be effectively enhanced, to prevent the stylus tip 10 from being detached from the housing 20 and being damaged during falling, thereby improving drop-resistant reliability.

In some embodiments of this application, the stylus tip 10 is mushroom-shaped. The head portion 11 of the stylus tip 10 forms a mushroom head, and the shank portion 12 forms a mushroom stem. Because the head portion 11 in the shape of the mushroom head has a thick wall, better wear resistance can be achieved, thereby prolonging a service life of the stylus tip 10. In addition, the head portion 11 in the shape of the mushroom head is not easily deformed during falling, so that drop-resistant reliability of the stylus tip 10 is further improved.

Compared with the foregoing solution in which the housing 20a is used to wrap the stylus tip 10a in FIG. 2, because it needs to be ensured that the stylus tip 10a can transmit a signal of a specific strength, a thickness of the housing 20a is limited. Therefore, the housing 20a is prone to deformation after long-term use or falling, and wear resistance is also poor. In this application, the stylus tip 10 is designed to be mushroom-shaped, so that wear resistance and drop-resistant reliability can be effectively improved.

Still with reference to FIG. 6B and FIG. 7, in some embodiments of this application, an end surface 13 of the stylus tip 10 is attached to an end surface 24 of the housing 20 in the X direction. A difference between a diameter of the end surface 13 and a diameter of the end surface 24 ranges from 0.1 mm to 0.3 mm, for example, 0.1 mm, 0.2 mm, or 0.3 mm. In addition, the diameter of the end surface 13 is greater than the diameter of the end surface 24. This can help avoid generating flash in a process of forming the stylus tip assembly 01, to further improve aesthetics of the stylus tip assembly 01, and prevent scratching a hand.

In some embodiments of this application, the outer diameter of the first connection portion 21 of the housing 20 gradually increases from the first end 211 to the second end 212, so that the stylus tip 1 has smoother appearance and better aesthetics and refinement. The first end 211 of the first connection portion 21 is farther away from the second connection portion 22 than the second end 212.

To avoid shrinkage phenomena (for example, local depressions and voids) caused by an excessively thick wall of the second end 212 of the first connection portion 21 in a process of forming the housing 20, in some embodiments of this application, an end surface 2121 of the second end 212 may be provided with an annular rib groove 213.

In some embodiments of this application, the stylus tip assembly 01 is detachably connected to the stylus barrel 02, so that the stylus tip assembly 01 is replaced at any time based on an actual requirement. For example, with reference to FIG. 6B in combination with FIG. 5B and FIG. 5C, the second connection portion 22 of the housing 20 is provided with an inner thread 221. The stylus barrel 02 is provided with an outer thread 04. The inner thread 221 and the outer thread 04 are threadedly engaged with each other, so that the housing 20 is connected to the stylus barrel 02. In this way, the stylus tip assembly 01 can be detached from the stylus barrel 02 by rotating the housing 20, to facilitate replacement. In addition, the inner thread 221 and the outer thread 04 are threadedly engaged with each other, so that strength of connection between the housing 20 and the stylus barrel 02 can be effectively enhanced. In this way, the stylus 1 is not easily broken, and drop reliability of the stylus 1 is further improved.

To avoid a case in which the housing 20 cannot be withdrawn from a threaded core (for example, the following second insert 34) in a process of forming the inner thread 221, in some embodiments of this application, a peripheral surface of the second connection portion 22 of the housing 20 may be provided with an anti-rotation groove 222.

In some embodiments of this application, a material of the housing 20 is an injection molding material. In other words, the housing 20 may be formed in an injection molding manner. An injection molding material may be polycarbonate or an acrylonitrile-butadiene-styrene copolymer (acrylonitrile-butadiene-styrene copolymer, ABS).

After the specific structures of the components and materials in the stylus 1 are described, the following continues to describe manners of forming the components and materials in the stylus 1.

This application provides a method for forming a composite material 100. The following describes the forming method.

FIG. 8 is a flowchart of a method for forming a composite material 100 according to an embodiment of this application. With reference to FIG. 8, the forming method specifically includes the following steps.

S110: Obtain a fiber tow.

In some embodiments of this application, fiber 110 may be subject to drawing and textile processing by using a process such as spinning, to obtain the fiber tow. The fiber 110 may include polyester fiber, polyester fiber, acrylic fiber, or nylon fiber.

S120: Perform impregnation processing on the fiber tow, to obtain a fiber tow coated with thermoplastic resin on a surface.

In some embodiments of this application, the thermoplastic resin 120 may be first mixed with an ester-based solvent to obtain a mixture of the thermoplastic resin 120 and the ester-based solvent, and then the fiber tow is pre-impregnated with the mixture of the thermoplastic resin 120 and the ester-based solvent, and the fiber tow is impregnated by using the mixture of the flowing thermoplastic resin 120 and the ester-based solvent. The ester-based solvent may further improve fluidity of the thermoplastic resin 120, to reduce difficulty in impregnation processing, thereby improving a yield rate of the composite material 100.

In some embodiments of this application, the thermoplastic resin 120 may be polyurethane resin, polycarbonate resin, polyoxymethylene resin, or thermoplastic polyamide elastomer resin.

In some implementations, the thermoplastic resin 120 may be the polyurethane resin. The polyurethane resin includes soft segments (flexible long chains of oligomeric polyol) and hard segments (diisocyanate and a chain extender), which are alternately arranged, and hydrogen bonds in urethane linkage, and has strong intermolecular force. The polyurethane resin has good wear resistance and toughness after being cured, so that durability of the composite material is further improved.

S130: Cure the thermoplastic resin coated on the surface of the fiber tow, to obtain the composite material.

Based on the foregoing step, the fiber tow coated with the thermoplastic resin 120 on the surface may be placed in a heating furnace. The heating furnace is used for heating, to make the ester-based solvent volatilize, so that the thermoplastic resin 120 is dried and cured, thereby obtaining the composite material 100 with proper hardness.

Based on the foregoing method for forming the composite material 100, a mixture of the fiber 110 and the thermoplastic resin 120 may be obtained through processing such as impregnation and curing, to obtain the composite material 100. The fiber 110 and the thermoplastic resin 120 that are bonded to each other can jointly form a first porous structure with resilience (for example, the first porous structure 110 shown in FIG. 4A), and a second porous structure with resilience (for example, the second porous structure 120 shown in FIG. 4B) can be formed inside the fiber 110, so that when the composite material 100 rubs against a touchscreen, a distinct rustling sound and a distinct gritty sensation can be generated. This method has simple steps and low forming difficulty.

In some embodiments of this application, the fiber tow may be a conductive fiber tow obtained through conductive processing, so that the prepared composite material 100 can be conductive.

For example, the conductive processing may specifically include: first cleaning the fiber tow by using an alkaline solution. Then, the cleaned fiber tow is soaked in metal salt solution, so that metal ions can be attached to the surface of the fiber tow. Finally, the metal ions attached to the surface of the fiber tow are reduced, so that the fiber tow can be conductive, thereby obtaining the conductive composite material 100.

In some implementations, the metal ions attached to the surface of the fiber tow may be reduced through physical vapor deposition (physical vapor deposition, PVD) processing, to further improve conductivity of the fiber tow.

In some implementations, the metal salt solution may be a copper sulfate metal salt solution, a nickel sulfate metal salt solution, or a copper chloride metal salt solution. Correspondingly, the metal ions may be copper-containing metal ions or nickel-containing metal ions.

In some embodiments of this application, the fiber tow may alternatively be pre-formed by using a grinding tool, to further improve uniformity, surface quality, and processability of the conductive fiber tow. For example, after the conductive processing is performed on the fiber tow, the fiber tow may be pre-formed by using a grinding tool, to eliminate surface defects (for example, uneven large protrusions and depressions) caused by the conductive processing, to facilitate subsequent processing and molding to obtain the composite material 100, thereby improving a yield rate of the composite material 100.

Based on the method for forming the composite material 100 provided in this application, this application further provides a method for forming a stylus tip 10. The following describes the forming method.

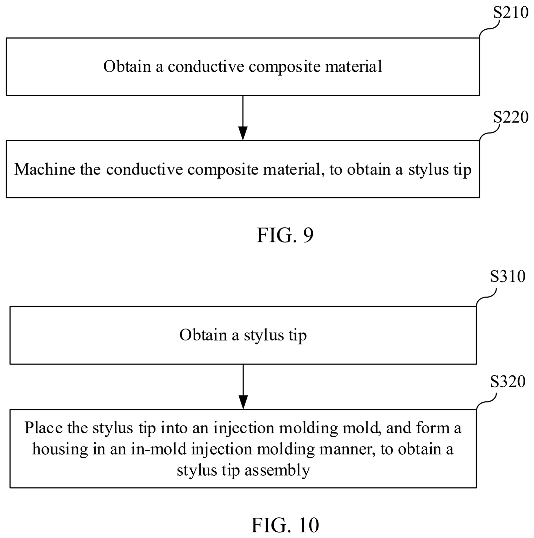

FIG. 9 is a flowchart of a method for forming a stylus tip 10 according to an embodiment of this application. With reference to FIG. 9, the forming method specifically includes the following steps.

S210: Obtain a conductive composite material.

For a specific method for obtaining the conductive composite material 100, refer to the foregoing method for forming the conductive composite material 100. Details are not described herein again.

S220: Machine the conductive composite material, to obtain a stylus tip.

In some embodiments of this application, operations such as cutting and grinding may be performed on the conductive composite material 100 based on an actual requirement, to process the conductive composite material 100 into a required shape (for example, the mushroom shape shown in FIG. 7), to obtain the stylus tip 10.

Based on the foregoing method for forming the stylus tip, the conductive composite material 100 may be properly machined to obtain the stylus tip 10. Because the conductive composite material 100 includes porous structures (for example, the first porous structure 130 and the second porous structure 140 that are shown in FIG. 4A and FIG. 4B), when the stylus tip 10 is used for writing, a distinct rustling sound and a distinct gritty sensation can be generated, so that writing experience of the user can be effectively improved. This method has simple steps and low forming difficulty.

Based on the method for forming the composite material 100 and the method for forming the stylus tip 10 that are provided in this application, this application further provides a method for forming a stylus tip assembly 01. The following describes the forming method.

FIG. 10 is a flowchart of a method for forming a stylus tip assembly 01 according to an embodiment of this application. With reference to FIG. 10, the forming method specifically includes the following steps.

S310: Obtain a stylus tip.

For a specific method for obtaining the stylus tip 10, refer to the foregoing steps S210 and S220. Details are not described herein again.

S320: Place the stylus tip into an injection molding mold, and form the housing in an in-mold injection molding manner, to obtain the stylus tip assembly.

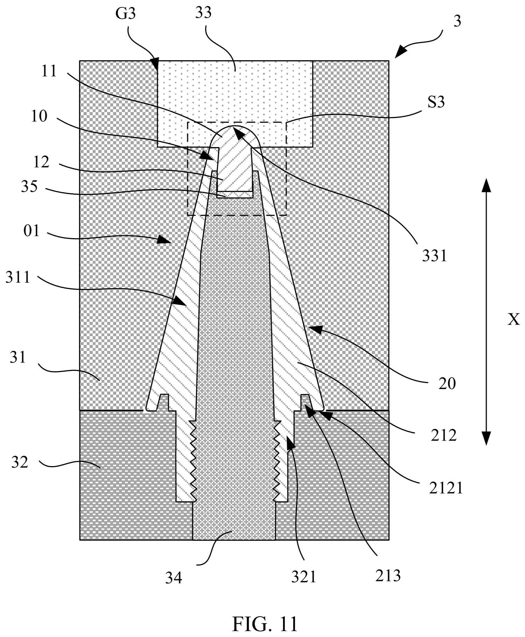

For example, FIG. 11 is a diagram of forming the stylus tip assembly 01 through in-mold injection molding in the injection molding mold 3 according to an embodiment of this application. With reference to FIG. 11, the injection molding mold 3 includes a front mold 31, a rear mold 32, a first insert 33, and a second insert 34.

The first insert 33 is disposed in the front mold 31. The first insert 33 is sleeved outside the head portion 11 of the stylus tip 10. The second insert 34 extends through the rear mold 32 and the front mold 31, and is clamped on the shank portion 12 of the stylus tip 10.

A front mold cavity 311 of the front mold 31 may fit with a rear mold cavity 321 of the rear mold 32 to correspondingly form an external structure of the housing 20. The second insert 34 may fit with the stylus tip 10 to form an internal structure of the housing 20.

An injection molding material used for forming the housing 20 is heated until fully molten, and then the fully molten injection molding material is injected under high pressure into a cavity of the injection molding mold 3. After cooling and shaping, the housing 20 is formed, to obtain the stylus tip assembly 01.

Based on the method for forming the stylus tip assembly 01, the stylus tip 10 is first prepared, and then the housing 20 and the stylus tip 10 are integrally formed through injection molding in the in-mold injection molding manner, so that a shape of the housing 20 can better adapt to an appearance of the stylus tip 10, and a fit gap between the housing 20 and the stylus tip 10 can be effectively reduced, thereby improving precision of the stylus tip assembly 01, further improving accuracy of transmitting writing force and pressure sensitivity, and reducing a sense of shaking of the stylus tip assembly 01 during writing. In addition, this forming manner is simple, a yield rate of the stylus tip assembly 01 is low, and the stylus tip assembly 01 is aesthetically pleasing.

For example, in the stylus tip assembly 01b shown in FIG. 3, the stylus tip 10b and the stylus barrel 02b are separately formed. The stylus tip 10b is formed through grinding, and forming precision is poor. The stylus tip 10b is mounted on the stylus barrel 02b in a plug-in manner, and there is a mounting error between the stylus barrel 02b and the stylus tip 10b, and fitting precision is low. Consequently, the stylus tip assembly 01b cannot accurately transmit writing force and pressure sensitivity, a sense of shaking is strong during writing, and appearance refinement is low. In this application, the stylus tip 10 and the housing 20 are integrally formed through injection molding in the in-mold injection molding manner, and the housing 20 can be more closely attached to the stylus tip 10, to effectively avoid a mounting error caused by poor precision of grinding and molding, so that fitting precision is improved, there is no sense of shaking during writing, and writing force and pressure sensitivity can be accurately transmitted. In addition, the integral stylus tip 10 and housing 20 have better aesthetics.

The following describes in detail a structure of the injection molding mold 3 with reference to the accompanying drawings.

Still with reference to FIG. 11 in combination with FIG. 6B and FIG. 7, in some embodiments of this application, the end surface 13 of the stylus tip 10 is attached to the end surface 24 of the housing 20 in the X direction. A difference between a diameter of the end surface 13 and a diameter of the end surface 24 ranges from 0.1 mm to 0.3 mm, where the diameter of the end surface 13 is greater than the diameter of the end surface 24. In addition, the head portion 11 of the stylus tip 10 is in interference fit with an inner wall 331 of the first insert 33.

Based on this, a radial tolerance of the stylus tip 10 can be effectively reduced, and it is ensured that the stylus tip 10 can be closely attached to the first insert 33, to implement injection molding and sealing, and an injection molding material does not overflow from a fit gap between the stylus tip 10 and the first insert 33, so that flash is not generated, thereby further improving aesthetics of the stylus tip assembly 01 and preventing scratching a hand.

In some embodiments of this application, an elastic pad 35 is disposed between the shank portion 12 of the stylus tip 10 and the second insert 34. In this way, an axial tolerance of the stylus tip 10 can be effectively reduced.

Still with reference to FIG. 11 in combination with FIG. 6B, in some embodiments of this application, the end surface 2121 of the second end 212 of the housing 20 may be provided with the annular rib groove 213. The annular rib groove 213 can effectively reduce thickness of the second end 212, to avoid shrinkage phenomena such as local depressions and voids at the second end 212 during injection molding, thereby further improving a yield rate of the housing 20.

In some embodiments of this application, a resin inlet may be provided in the annular rib groove 213. In this way, injection molding marks (for example, jetting marks and flow marks caused by jetting) are avoided on a surface of the stylus tip assembly 01, and aesthetics and refinement of the appearance of the stylus tip assembly 01 are effectively improved.

In some embodiments of this application, a peripheral surface of the second connection portion 22 of the housing 20 may be provided with an anti-rotation groove 222. The anti-rotation groove 222 can prevent the housing 20 from rotating with the second insert 34. In this way, after the inner thread 221 of the housing 20 is formed, the second insert 34 can be smoothly withdrawn through rotation, to avoid damage to the housing 20 in a demolding process, thereby effectively improving the yield rate of the housing 20.

Still with reference to FIG. 11, in some embodiments of this application, a gap G3 between the first insert 33 and the front mold 31 may be used for exhausting air. In this way, there is no need to additionally provide another vent on the front mold 31, so that an appearance surface of the formed stylus tip assembly 01 is smooth and flawless, thereby further improving aesthetics of the stylus tip assembly 01. In addition, the gap G3 can ensure smooth resin flow after injection, and avoids phenomena such as air traps and short shots in complex structures or dead corners (for example, an S3 region in FIG. 11).

In some other embodiments of this application, the composite material 100 may alternatively be formed through injection molding.

For example, the fiber 110 and the thermoplastic resin 120 may be mixed to obtain an injection molding material used to prepare the composite material 100, and then the injection molding material used to prepare the composite material 100 is injected into an injection molding mold by using an injection molding machine, to obtain the composite material 100 after cooling and shaping.

A material of the fiber 110 may be carbon fiber, aramid fiber, or glass fiber. The thermoplastic resin 120 may be polyurethane resin, polycarbonate resin, polyoxymethylene resin, or thermoplastic polyamide elastomer resin.

In some embodiments of this application, the thermoplastic resin 120 may be conductive thermoplastic resin obtained through conductive processing, so that the prepared composite material 100 can be conductive. For example, a conductive filler (for example, carbon, metal powder, or metal fiber) may be filled in the molten thermoplastic resin 120, so that the thermoplastic resin 120 can be conductive.

To further enhance conductivity of the composite material 100, in some implementations, the fiber 110, the thermoplastic resin 120, and a conductive filler (for example, carbon, metal powder, or metal fiber) may be further mixed to obtain an injection molding material used to prepare the composite material 100, and then the injection molding material used to prepare the composite material 100 is injected into an injection molding mold by using an injection molding machine, and the conductive composite material 100 is obtained after cooling and shaping.

Based on the foregoing method for forming the composite material 100, in some embodiments of this application, the stylus tip 10 and the housing 20 may alternatively be formed through injection molding, to obtain the stylus tip assembly 01.

For example, an injection molding material used to prepare the stylus tip 10 and an injection molding material used to prepare the housing 20 may be first formulated, and then the two injection molding materials are separately injected into a cavity of an injection molding mold (for example, the foregoing injection molding mold 3) correspondingly by using a two-shot injection molding machine. After cooling and shaping, the stylus tip assembly 01 is obtained. The injection molding material used to prepare the stylus tip 10 is consistent with the injection molding material used to prepare the conductive composite material 100, and details are not described herein again.

Based on the foregoing method for forming the stylus tip assembly 01, the stylus tip assembly 01 can be formed through a single operation, to effectively reduce a fit gap between the stylus tip 10 and the housing 20, and improve forming precision, and a yield rate of the stylus tip assembly 01 is high. For example, in the stylus tip assembly 01a shown in FIG. 2, the stylus tip 10a and the conductive pin 30a are integrally formed by using an in-mold injection molding process, then the stylus tip assembly 01a and the housing 20a are integrally formed through injection molding, and then an elastic component is connected to the stylus tip 10a by using an adhesive or heat staking, to finally obtain the stylus tip assembly 01a. Forming steps of the stylus tip assembly 01a are cumbersome complex, and forming precision is unstable. As a result, the yield rate of the stylus tip assembly 01a is low. In this application, the stylus tip assembly 01 can be formed through a single operation by using the foregoing forming method, to effectively avoid a mounting deviation caused by a plurality of times of injection molding assembly, so that forming precision and the yield rate are higher, and steps are simple.

In some embodiments of this application, forming shrinkage of the injection molding material used to prepare the housing 20 is similar to that of the injection molding material used to prepare the stylus tip 10, to further improve forming precision, so that an appearance of the stylus tip assembly 01 is flatter, and requirements for subsequent processing and machining are reduced. For example, the injection molding material used to prepare the housing 20 may be polycarbonate or an acrylonitrile-butadiene-styrene copolymer.

In some embodiments of this application, when the injection molding material used to prepare the housing 20 may be the polycarbonate or the acrylonitrile-butadiene-styrene copolymer, the thermoplastic resin 120 in the injection molding material used to prepare the stylus tip 10 may be thermoplastic polyurethane. Polarity of the thermoplastic polyurethane is similar to that of the polycarbonate or the acrylonitrile-butadiene-styrene copolymer. Therefore, the thermoplastic polyurethane and the polycarbonate or the acrylonitrile-butadiene-styrene copolymer may implement compatibility, permeation, and penetration in a molten state, to form bonding at a molecular chain level, to increase bonding force, thereby further improving strength of connection between the stylus tip assembly 10 and the housing 20.

The technical solutions in this embodiment are described above. It should be noted that this embodiment is example descriptions of the technical solutions of this application, and a person skilled in the art may make other variations.

For example, in this embodiment, injection molding is performed in the injection molding mold in a two-shot injection molding manner, to obtain the integrally formed stylus tip assembly 01. However, this application is not limited thereto.

In some other embodiments, alternatively, the stylus tip 10 may be first formed through injection molding in the injection molding mold, and then the housing 20 is formed through injection molding in the injection molding mold in an in-mold injection molding manner, to obtain the stylus tip assembly 01. The injection molding material used to prepare the stylus tip 10 is consistent with the injection molding material used to prepare the conductive composite material 100, and the injection molding material used to prepare the housing 20 is consistent with the injection molding material used to prepare the housing 20 in the foregoing two-shot injection molding process, and details are not described herein again.

In some other embodiments, the stylus tip 10 may alternatively be separately formed through injection molding in the injection molding mold. The injection molding material used to prepare the stylus tip 10 is consistent with the injection molding material used to prepare the conductive composite material 100, and details are not described herein again.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, an objective of describing this application with reference to implementations is to cover another option or modification that may be derived based on the claims of this application. This application may be alternatively implemented without using these details. In addition, to avoid confusion or blurring a focus of this application, some details are omitted from the descriptions. It should be noted that embodiments in this application and the features in embodiments may be mutually combined in the case of no conflict.

In the descriptions of this application, it should be noted that, orientations or position relationships indicated by terms such as "center", "up", "down", "left", "right", "vertical", "horizontal", "outer side", "inner side", "circumferential direction", "radial direction", and "axial direction" are based on the orientations or position relationships shown in the accompanying drawings, and are merely intended to describe this application and simplify the descriptions, but are not intended to indicate or imply that an indicated apparatus or element needs to have a specific orientation or be constructed and operated in a specific orientation, and therefore cannot be understood as a limitation on this application.

In the descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. A person of ordinary skill in the art may understand a specific meaning of the foregoing term in this application based on a specific situation.

Apparently, a person skilled in the art may make various modifications and variations to this application without departing from the spirit and the protection scope of this application. This application is intended to cover these modifications and variations of this application provided that they fall within the scope defined by the following claims of this application and their equivalent technologies.

## Claims

1. A composite material, wherein the composite material comprises at least a mixture of fiber and thermoplastic resin, the fiber and the thermoplastic resin are bonded to each other to jointly form a first porous structure, a second porous structure is formed inside the fiber, and the first porous structure and the second porous structure have resilience.

2. The composite material according to claim 1, wherein the fiber is conductive fiber obtained through conductive processing, and/or the thermoplastic resin is conductive thermoplastic resin obtained through conductive processing.

3. The composite material according to claim 2, wherein the composite material further comprises a mixture of a conductive filler, fiber, and thermoplastic resin.

4. The composite material according to claim 3, wherein the conductive filler comprises carbon, metal powder, or metal fiber.

5. The composite material according to any one of claims 2 to 4, wherein conductivity of the composite material ranges from 0.001 S/m to 1 S/m.

6. The composite material according to claim 1, wherein the fiber comprises polyester fiber, polyester fiber, acrylic fiber, nylon fiber, carbon fiber, aramid fiber, or glass fiber.

7. The composite material according to claim 1, wherein the thermoplastic resin comprises polyurethane resin, polycarbonate resin, polyoxymethylene resin, or thermoplastic polyamide elastomer resin.

8. The composite material according to claim 1, wherein a weight of the fiber accounts for 40% to 70% of a total weight of the composite material, and a weight of the thermoplastic resin accounts for 20% to 50% of the total weight of the composite material.

9. The composite material according to claim 3, wherein a weight of the fiber accounts for 10% to 30% of a total weight of the composite material, a weight of the thermoplastic resin accounts for 60% to 90% of the total weight of the composite material, and a weight of the conductive filler accounts for 2% to 10% of the total weight of the composite material.

10. A stylus tip, wherein a material of a writing end of the stylus tip is the composite material according to any one of claims 1 to 9.

11. The stylus tip according to claim 10, wherein a material of the stylus tip is the composite material, and the composite material is conductive.

12. A stylus tip assembly, comprising a housing and the stylus tip according to claim 10 or 11, wherein the stylus tip comprises a head portion and a shank portion that are connected in a first direction, the writing end is disposed on the head portion, and the shank portion is inserted into the housing; and
the shank portion comprises a first shank segment, the first shank segment is attached to an inner wall of the housing, an outer diameter of the first shank segment gradually increases from a first end to a second end of the first shank segment, and the first end is closer to the head portion than the second end.

13. The stylus tip assembly according to claim 12, wherein the stylus tip is mushroom-shaped, the head portion forms a mushroom head, and the shank portion forms a mushroom stem.

14. The stylus tip assembly according to claim 12, wherein a material of the housing is an injection molding material.

15. The stylus tip assembly according to claim 12, wherein a material of the housing comprises polycarbonate or an acrylonitrile-butadiene-styrene copolymer.

16. A stylus, comprising a stylus barrel and the stylus tip assembly according to any one of claims 12 to 15, wherein the stylus tip assembly is connected to the stylus barrel through the housing.

17. A method for forming a composite material, wherein the method comprises:
obtaining a fiber tow;
performing impregnation processing on the fiber tow, to obtain a fiber tow coated with thermoplastic resin on a surface; and
curing the thermoplastic resin coated on the surface of the fiber tow, to obtain the composite material.

18. The method according to claim 17, wherein the fiber tow is a conductive fiber tow obtained through conductive processing.

19. The method according to claim 18, wherein the conductive processing comprises:
cleaning the fiber tow by using an alkaline solution;
soaking a cleaned fiber tow in a metal salt solution, to attach metal ions to the surface of the fiber tow; and
reducing the metal ions attached to the surface of the fiber tow, so that the fiber tow is conductive.

20. The forming method according to claim 17, wherein the fiber tow is a fiber tow obtained after grinding processing.

21. The method according to claim 17, wherein performing the impregnation processing on the fiber tow comprises:
mixing the thermoplastic resin and an ester-based mixed solvent, to obtain a mixture; and
impregnating the fiber tow by using the mixture.

22. A method for forming a stylus tip assembly, used to form the stylus tip assembly according to any one of claims 12 to 15, wherein the method comprises:
obtaining the stylus tip; and
placing the stylus tip into an injection molding mold, and forming the housing in an in-mold injection molding manner, to obtain the stylus tip assembly.

23. The method according to claim 22, wherein the injection molding mold comprises a front mold, a rear mold, a first insert, and a second insert, wherein
the first insert is disposed in the front mold, the first insert is sleeved outside the head portion of the stylus tip, and the second insert extends through the front mold and the rear mold, and is clamped on the shank portion of the stylus tip; and
a cavity of the front mold fits with a cavity of the rear mold to correspondingly form an external structure of the housing of the stylus tip, and the second insert fits with the stylus tip to correspondingly form an internal structure of the housing of the stylus tip.

24. The method according to claim 23, wherein the head portion of the stylus tip is in interference fit with an inner wall of the first insert, and an end surface of the stylus tip is attached to an end surface of the housing in the first direction, wherein a difference between a diameter of the end surface of the stylus tip and a diameter of the end surface of the housing ranges from 0.1 mm to 0.3 mm, the diameter of the end surface of the stylus tip is greater than the diameter of the end surface of the housing, and the first direction is an extension direction of the stylus tip.

25. The method according to claim 23, wherein an elastic pad is disposed between the shank portion of the stylus tip and the second insert in the first direction, and the first direction is an extension direction of the stylus tip.

26. The method according to claim 23, wherein the housing comprises a first connection portion and a second connection portion that are connected in the first direction, the first direction is an extension direction of the stylus tip, the first connection portion is configured to connect to the shank portion of the stylus tip, an outer diameter of the first connection portion of the housing gradually increases from a first end of the first connection portion to a second end of the first connection portion, and the first end of the first connection portion is farther away from the second connection portion than the second end; and
an end surface of the second end is provided with an annular rib groove.

27. The method according to claim 26, wherein a resin inlet of the injection molding mold is provided in the annular rib groove.

28. The method according to claim 23, wherein the housing comprises a first connection portion and a second connection portion that are connected in the first direction, the second connection portion of the housing is provided with an inner thread used for threaded engagement with a stylus barrel, and a peripheral surface of the second connection portion of the housing is provided with an anti-rotation groove.

29. The method according to claim 23, wherein a gap between the first insert and the front mold is used for exhausting air.

30. A method for forming a stylus tip assembly, used to form the stylus tip assembly according to any one of claims 12 to 15, wherein the method comprises: forming the stylus tip and the housing of the stylus tip by using a two-shot injection molding process in an injection molding mold, to obtain the stylus tip assembly.
